# EUROPEAN PATENT APPLICATION

(11) **EP 4 560 515 A1**
(43) Date of publication of application: **28.05.2025**
(21) Application number: 23902421.9
(22) Date of filing: 21.11.2023
(51) Int. Cl.: G06F 21/84

(54) **INFORMATION PROTECTION METHOD, AND DEVICE**

(30) Priority: 12.12.2022 CN 202211591291
(71) Applicant: Huawei Technologies Co., Ltd., Shenzhen, Guangdong 518129 (CN)
(72) Inventor: ZHANG, Tuo, Shenzhen, Guangdong 518129 (CN); FANG, Xiwen, Shenzhen, Guangdong 518129 (CN); PAN, Shiran, Shenzhen, Guangdong 518129 (CN)
(74) Representative: MERH-IP Matias Erny Reichl Hoffmann Patentanwälte PartG mbB
(86) International application number: PCT/CN2023/132857
(87) International publication number: WO 2024/125222

(57) **Abstract**

This application provides an information protection method and a device. The method is performed by a device B. The method includes: displaying an interface 1 of an application 1, where the interface 1 includes at least one information element; detecting an operation 1 of starting an application 2, and starting the application 2 based on the operation 1, where the application 2 is used to process the interface 1; determining whether the at least one information element on the interface 1 has a preset label; and when it is determined that none of the at least one information element on the interface 1 has the preset label, allowing the application 2 to process the interface 1; or when it is determined that the at least one information element on the interface 1 has the preset label, performing non-presentation processing on an information element having the preset label, and allowing the application 2 to process the interface 1 on which the non-presentation processing has been performed. In this way, information security and normal use can be balanced in this application.

## Description

This application claims priority to Chinese Patent Application No. 202211591291.7, filed with the China National Intellectual Property Administration on December 12, 2022 and entitled "INFORMATION PROTECTION METHOD AND DEVICE", which is incorporated herein by reference in its entirety.

### TECHNICAL FIELD

This application relates to the information protection field, and more specifically, to an information protection method and a device.

### BACKGROUND

In a window scenario such as a chat, a conference, or a video, people perform information protection on displayed information of a window, to prevent another user from obtaining the displayed information of the window by taking a screenshot/performing screen recording on the displayed information of the window.

However, in an existing information protection method, information security and normal use cannot be balanced.

### SUMMARY

This application provides an information protection method and a device, so that information security and normal use can be balanced.

According to a first aspect, an information protection method is provided. The method is performed by a device, and the method includes: displaying an interface of a first application, where the interface includes at least one information element; detecting an operation of starting a second application, and starting the second application based on the operation, where the second application is used to process the interface; determining whether the at least one information element has a preset label; and when it is determined that none of the at least one information element has the preset label, allowing the second application to process the interface; or when it is determined that the at least one information element has the preset label, performing non-presentation processing on an information element having the preset label, and allowing the second application to process the interface on which the non-presentation processing has been performed.

In this embodiment of this application, presentation may include one or more of the following: document displaying, application interface displaying, audio and video playing, audio playing, or the like. Therefore, the non-presentation processing is a type of processing on presentation. For example, a part of content of a document cannot be normally presented.

Specifically, the preset label is set at an information element level of the interface of the first application, where the preset label indicates that information of the information element for which the preset label is set needs to be protected. Before allowing the second application to process the interface of the first application, the device first determines whether the interface of the first application has the information element for which the preset label is set. If the interface of the first application has the information element for which the preset label is set, non-presentation processing is performed on the information element for which the preset label is set, so that the information of the information element for which the preset label is set is not obtained by another user, and the another user is not prevented from obtaining information of an information element that is on the interface of the first application and for which no preset label is set.

In conclusion, the preset label is set at the information element level, and the device performs non-presentation processing on the information element for which the preset label is set. In this way, information protection and normal use can be balanced.

In a possible implementation, before the performing non-presentation processing on an information element having the preset label, the method further includes: obtaining verification information of a user of the second application; and verifying, based on the verification information, whether the user is a trusted user.

Through setting of a verification mechanism, this application supports verification processing on the user of the second application, and on a premise that it is determined that the user of the second application is not the trusted user, non-presentation processing is performed on the information element that is on the interface of the first application and for which the preset label is set. In this way, information security of the information element that is on the interface of the first application and for which the preset label is set can be ensured, and the trusted user can obtain the information of the information element that is on the interface of the first application and for which the preset label is set.

In a possible implementation, the non-presentation processing is performed on the information element having the preset label when it is determined that the user is not the trusted user.

Specifically, when the device determines that the user of the second application is the trusted user, the device does not perform non-presentation processing on the information element that is on the interface of the first application and for which the preset label is set. In this way, the trusted user can obtain the information of the information element that is on the interface of the first application and for which the preset label is set. When the device determines that the user of the second application is an untrusted user, the device performs non-presentation processing on the information element that is on the interface of the first application and for which the preset label is set. In this way, information security of the information element that is on the interface of the first application and for which the preset label is set can be protected.

In a possible implementation, the non-presentation processing includes at least one of the following: blocking, blurring, mosaic, or sound elimination.

In this way, information security of the information element for which the preset label is set can be protected.

In a possible implementation, the preset label is manually set and generated by the user.

In this way, the user can be supported in setting the preset label for an information element on which information protection needs to be performed, so that information security of the information element can be flexibly protected.

According to a second aspect, an information protection method is provided. The method is performed by a device, and the method includes: displaying an interface including at least one file icon, where the at least one file icon includes a first file icon; detecting an operation performed on the first file icon, and in response to the operation, opening, by using a first application, a first file corresponding to the first file icon; before to-be-presented content of the first file is presented by using the first application, determining whether at least one information element in the to-be-presented content has a preset label; and when it is determined that none of the at least one information element has the preset label, presenting the to-be-presented content by using the first application; or when it is determined that the at least one information element has the preset label, performing non-presentation processing on an information element having the preset label, and presenting, by using the first application, the to-be-presented content on which the non-presentation processing has been performed.

Specifically, the preset label is set at an information element level of the to-be-presented content of the first file, where the preset label indicates that information of the information element for which the preset label is set needs to be protected. Before allowing the first application to present the to-be-presented content of the first file, the device first determines whether the to-be-presented content of the first file has the information element for which the preset label is set. If the to-be-presented content of the first file has the information element for which the preset label is set, non-presentation processing is performed on the information element for which the preset label is set, so that the information of the information element for which the preset label is set is not obtained by another user, and the another user is not prevented from obtaining information of an information element that is in the to-be-presented content of the first file and for which no preset label is set.

In conclusion, the preset label is set at the information element level, and the device performs non-presentation processing on the information element for which the preset label is set. In this way, information protection and normal use can be balanced.

In a possible implementation, before the performing non-presentation processing on an information element having the preset label, the method further includes: obtaining verification information of a user of the first application; and verifying, based on the verification information, whether the user is a trusted user.

Through setting of a verification mechanism, this application supports verification processing on the user of the first application, and on a premise that it is determined that the user of the first application is not the trusted user, non-presentation processing is performed on the information element that is in the to-be-presented content of the first file and for which the preset label is set. In this way, information security of the information element that is in the to-be-presented content of the first file and for which the preset label is set can be ensured, and the trusted user can obtain the information of the information element that is in the to-be-presented content of the first file and for which the preset label is set.

In a possible implementation, the non-presentation processing is performed on the information element having the preset label when it is determined that the user is not the trusted user.

In a possible implementation, the non-presentation processing includes at least one of the following: blocking, blurring, mosaic, or sound elimination.

In a possible implementation, the preset label is manually set and generated by the user.

In this way, the user can be supported in setting the preset label for an information element on which information protection needs to be performed, so that information security of the information element can be flexibly protected.

According to a third aspect, a device is provided. The device includes modules/units that perform the method according to any one of the first aspect or the possible designs of the first aspect. The modules/units may be implemented by hardware, or may be implemented by hardware executing corresponding software. Alternatively, the device includes modules/units that perform the method according to any one of the second aspect or the possible designs of the second aspect. The modules/units may be implemented by hardware, or may be implemented by hardware executing corresponding software.

According to a fourth aspect, a chip is provided. The chip is coupled to a memory in a device, and is configured to invoke a program stored in the memory and perform the technical solution according to any one of the first aspect and the possible implementations of the first aspect, or is configured to invoke a program stored in the memory and perform the technical solution according to any one of the second aspect and the possible implementations of the second aspect. In this embodiment of this application, "coupling" means a direct or indirect combination of two components.

According to a fifth aspect, a readable storage medium is provided. The readable storage medium includes a program. When the program runs on a device, the device is enabled to perform the technical solution according to any one of the first aspect and the possible implementations of the first aspect, or the device is enabled to perform the technical solution according to any one of the second aspect and the possible implementations of the second aspect.

According to a sixth aspect, a program is provided. The program includes instructions. When the instructions are run on a device, the device is enabled to perform the technical solution according to any one of the first aspect and the possible implementations of the first aspect, or the device is enabled to perform the technical solution according to any one of the second aspect and the possible implementations of the second aspect.

According to a seventh aspect, a graphical user interface of a device is provided. The device has a display, at least one memory, and at least one processor. The at least one processor is configured to execute at least one program stored in the at least one memory. The graphical user interface includes a graphical user interface displayed when the device performs the technical solution according to any one of the first aspect and the possible implementations of the first aspect, or the graphical user interface includes a graphical user interface displayed when the device performs the technical solution according to any one of the second aspect and the possible implementations of the second aspect.

For beneficial effects of the third aspect to the seventh aspect, refer to the descriptions of the beneficial effects of the first aspect. Details are not described herein again.

### BRIEF DESCRIPTION OF DRAWINGS

FIG. 1 is a schematic flowchart of an information protection method 100;
FIG. 2 is a schematic flowchart of an information protection method 200 according to an embodiment of this application;
FIG. 3 is a schematic flowchart of an information protection method 300 according to an embodiment of this application;
FIG. 4 is a diagram of an application scenario 400;
FIG. 5 is a diagram of an application scenario 500;
FIG. 6 is a diagram of an application scenario 600;
FIG. 7 is a diagram of an application scenario 700;
FIG. 8 is a diagram of an application scenario 800;
FIG. 9 is a diagram of an application scenario 900;
FIG. 10 is a diagram of preset label setting 1000;
FIG. 11 is a diagram of preset label using 1100;
FIG. 12 is a diagram of preset label using 1200;
FIG. 13 is a block diagram of a structure of a device 1300 according to an embodiment of this application;
FIG. 14 is a diagram of a hardware structure of a device 1400 according to an embodiment of this application; and
FIG. 15 is a diagram of a software structure of a device 1500 according to an embodiment of this application.

### DESCRIPTION OF EMBODIMENTS

The following describes technical solutions of this application with reference to accompanying drawings.

Terms used in the following embodiments are merely intended to describe particular embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

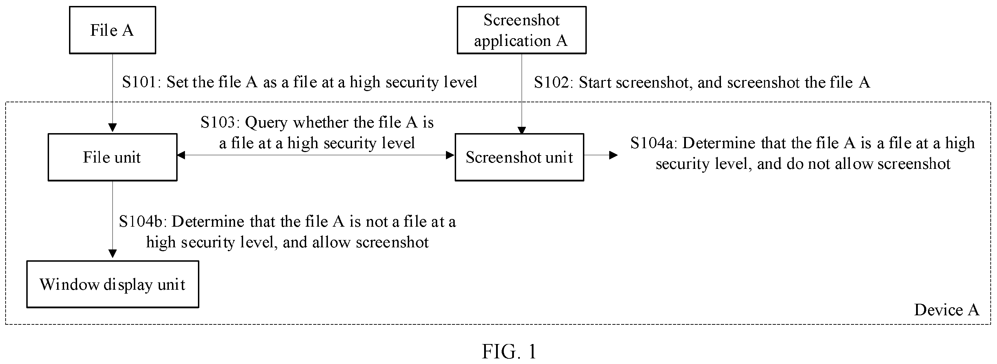

FIG. 1 is a schematic flowchart of an information protection method 100. Execution of the method 100 relates to interaction between a file A, a screenshot application A, and a device A. The device A includes a processing unit, a file unit, and a display unit.

Specifically, a user 1 sets a security label 1 for the file A. The security label 1 indicates that the file A is a file at a high security level, and further indicates that the screenshot application is not allowed to screenshot the file A. The file unit obtains the security label 1, and determines, based on the security label 1, that the file A is a file at a high security level (S 101). A user 2 starts the screenshot application A, where the screenshot application A is used to screenshot the file A (S 102). The processing unit determines, by interacting with the file unit, whether the file A is a file at a high security level (S 103). When determining that the file A is a file at a high security level, the processing unit prevents the screenshot application A from screenshotting the file A, that is, does not allow screenshot (S 104b). When determining that the file A is not a file at a high security level, the processing unit allows the screenshot application A to screenshot the file A, and the display unit displays a screenshot process and result (S104a).

It can be learned from the foregoing description that, when the file A is a file at a high security level, the device A prevents the screenshot application A from screenshotting the file A. However, the method 100 has a problem of over-protection of the file A. For example, only a part of page information in the file A needs to be protected. If the method 100 is applied, the user 2 cannot normally use page content that is in the file A and that does not require information protection. Therefore, in the method 100, information security and normal use cannot be balanced.

In view of the foregoing technical problem, this application provides an information protection method and a device, so that information security and normal use can be balanced.

The following describes the information protection method and the device in embodiments of this application with reference to the accompanying drawings.

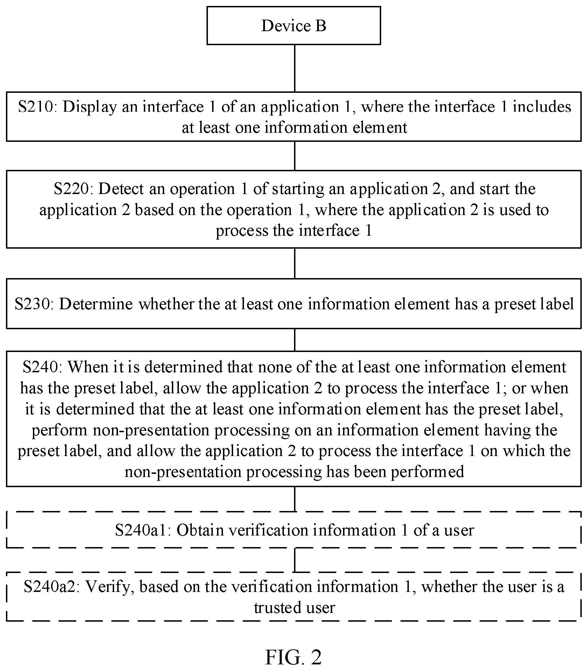

FIG. 2 is a schematic flowchart of an information protection method 200 according to an embodiment of this application. Execution of the method 200 relates to interaction between an application 1 (for example, a first application), an application 2 (for example, a second application), and a device B. As shown in FIG. 2, the method 200 includes the following steps.

S210: The device B displays an interface 1 of the application 1, where the interface 1 includes at least one information element.

It may be understood that the interface 1 includes the at least one information element, and each information element may be a control, or may be content, or may be in another composition form. For example, if the application 1 is a payment application, an interface of the payment application may include a control, for example, an input control or a password control. For example, if the application 1 is a chat application, an interface of the chat application may include content, for example, a chat record. In conclusion, a definition of the information element is not specifically limited in this application.

In a possible implementation, a type of each information element in the at least one information element may be different. For example, some information elements are controls, and some information elements are content. This is not specifically limited in this application.

S220: The device B detects an operation 1 of starting the application 2, and starts the application 2 based on the operation 1.

Specifically, that the device B starts the application 2 based on the operation 1 may be understood as that the device B responds to the operation 1 of starting the application 2, in other words, the device B starts the application 2 in response to the operation 1. The application 2 may process the interface 1 of the application 1. For example, if the application 1 is a chat application, and the application 2 is a screenshot application, the screenshot application may screenshot a chat record on a chat application interface of the chat application.

S230: The device B determines whether the at least one information element has a preset label.

Specifically, the device B displays the interface 1, and starts the application 2. To protect information on the interface 1 from being obtained by the outside, the device B needs to determine whether the preset label is set for the information element on the interface 1. The preset label can indicate that information of an information element that is on the interface 1 and for which the preset label is set needs to be protected.

For example, the interface 1 includes 10 information elements, and a user sets preset labels for five information elements in the 10 information elements. Before allowing the application 2 to process the interface 1, the device B needs to determine whether preset labels are set for the 10 information elements. In this way, an information protection function can be implemented.

In a possible implementation, the preset label may further include alternative expressions such as a preset mark, a preset symbol, a preset sign, and a security label.

S240: When it is determined that none of the at least one information element has the preset label, allow the application 2 to process the interface 1; or when it is determined that the at least one information element has the preset label, perform non-presentation processing on the information element having the preset label, and allow the application 2 to process the interface 1 on which the non-presentation processing has been performed.

In an example, when determining that none of the at least one information element on the interface 1 has the preset label, the device B allows the application 2 to process the interface 1. In an example, when determining that the information element for which the preset label is set exists in the at least one information element on the interface 1, the device B performs non-presentation processing on the information element for which the preset label is set (that is, on each information element for which the preset label is set).

Further, the device B allows the application 2 to process the interface 1 on which the non-presentation processing has been performed. In this way, information security protection can be implemented on an information element that is on the interface 1 and on which information protection needs to be performed, and processing performed by the application 2 on another information element that is on the interface 1 and for which no preset label is set is not affected, so that both information protection and normal use are ensured.

For example, the interface 1 includes the 10 information elements. Before the device B allows the application 2 to perform an operation on the interface 1, the device B needs to determine whether the preset labels are set for the 10 information elements on the interface 1. When determining that none of the 10 information elements on the interface 1 has the preset label, the device B allows the application 2 to process the interface 1. When determining that the five information elements in the 10 information elements on the interface 1 have the preset labels, after performing non-presentation processing on the five information elements having the preset labels, the device B allows the application 2 to process the interface 1 on which the non-presentation processing has been performed.

It should be understood that the non-presentation processing may be processing the information element having the preset label on the interface 1, to ensure information security of the information element having the preset label on the interface 1. This is further described below.

In a possible implementation, the non-presentation processing includes but is not limited to at least one of the following: blocking, blurring, mosaic, or sound elimination. In this way, information protection can be implemented on the information element on which information protection needs to be performed.

For example, in a screenshot scenario, a user 1 sets preset labels (for example, the preset labels are anti-screenshot labels) for one or more information elements that are on the interface 1 and that are not allowed to be screenshotted, and the device B may allow the application 2 to screenshot the interface 1, but a screenshot display result of the application 2 for the interface 1 includes normal screenshot content and abnormal screenshot content. The abnormal screenshot content is presented screenshot content of the information element for which the preset label is set and on which the device B has performed non-presentation processing, and the normal screenshot content is a result of normally screenshotting, by the application 2, an information element that is on the interface 1 and for which no preset label is set. It should be understood that the device B belongs to the user 1.

Specifically, the user 1 sets the preset label at an information element level of the interface 1, where the preset label indicates that information of the information element for which the preset label is set needs to be protected. In this case, before allowing the application 2 to process the interface 1, the device B first determines whether the interface 1 has the information element for which the preset label is set. If the interface 1 has the information element for which the preset label is set, non-presentation processing is performed on the information element for which the preset label is set, so that the information of the information element for which the preset label is set is not obtained by another user, and the another user is not prevented from obtaining information of the information element that is on the interface 1 and for which no preset label is set.

In conclusion, the preset label is set at the information element level, and the device performs non-presentation processing on the information element for which the preset label is set. In this way, information protection and normal use can be balanced.

Optionally, in a possible implementation, before the device B performs non-presentation processing on the information element having the preset label, the method 200 may further include:
S240a1: The device B obtains verification information 1 of the user.
S240a2: The device B verifies, based on the verification information 1, whether the user is a trusted user.

Specifically, when the device B determines that the interface 1 has the information element for which the preset label is set, the device B may require the user (the user may be the user 1 of the application 1 and a user 2 of the application 2, or may be a user 2 of the application 2, and this is not limited herein) to enter the verification information 1 for verifying whether the user is the trusted user. In this way, the information of the information element that is on the interface 1 and for which the preset label is set may not be obtained by an untrusted user, and information security of the interface 1 is ensured.

In a possible implementation, the verification information 1 includes but is not limited to at least one of the following information: fingerprint/face/personal identification number (personal identification number, PIN)/account. The device B may pre-obtain information that is entered by the user 1 and that is used to confirm the trusted user, for example, a key, a PIN, or account information. When the user (for example, the user 2) wants to process the interface 1 by using the application 2, the user needs to enter the verification information 1. The device B determines, based on the verification information 1 and pre-stored information, whether the user 2 is the trusted user, and further determines whether to allow the application 2 to process the interface 1.

Further, when the device B determines, based on the verification information 1, that the user is the trusted user, the device B does not perform non-presentation processing on the information element that is on the interface 1 and for which the preset label is set. In this way, the trusted user can obtain the information of the information element that is on the interface 1 and for which the preset label is set. When the device B determines, based on the verification information 1, that the user is not the trusted user, the device B performs non-presentation processing on the information element that is on the interface 1 and for which the preset label is set. In this way, information security of the information element that is on the interface 1 and for which the preset label is set can be ensured.

Through setting of a verification mechanism, this application supports verification processing on the user, and on a premise that it is determined that the user is not the trusted user, non-presentation processing is performed on the information element that is on the interface 1 and for which the preset label is set. In this way, information security of the information element that is on the interface 1 and for which the preset label is set can be ensured, and the trusted user can obtain the information of the information element that is on the interface 1 and for which the preset label is set.

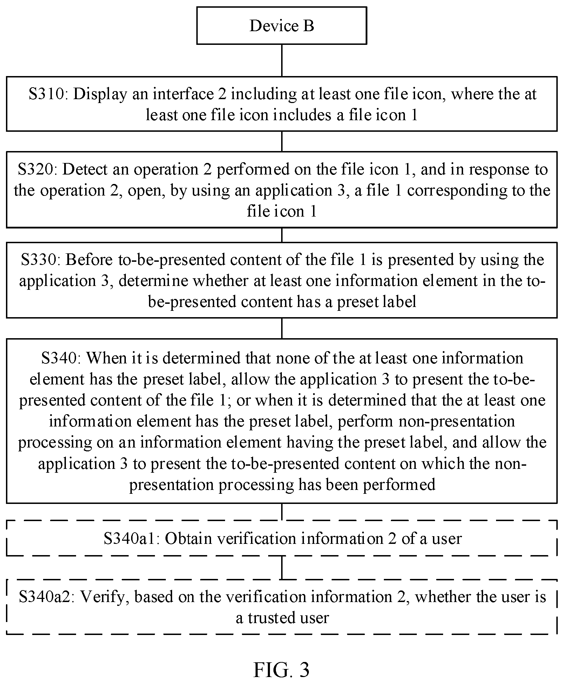

FIG. 3 is a schematic interaction flowchart of an information protection method 300 according to an embodiment of this application. Execution of the method 300 relates to interaction between an application 3 (for example, a third application), a file 1 (for example, a first file), and a device B. As shown in FIG. 3, the method 300 includes the following steps.

S310: The device B displays an interface 2 including at least one file icon, where the at least one file icon includes a file icon 1.

Specifically, the device B displays the interface 2 including one or more file icons. For a process in which the device B displays the interface 2, refer to an existing procedure. Details are not described herein.

S320: The device B detects an operation 2 performed on the file icon 1, and in response to the operation 2, opens, by using an application 3, a file 1 corresponding to the file icon 1.

Specifically, after the device B detects the operation 2 performed on the file icon 1, the device B responds to the operation 2, that is, starts the application 3, and uses the application 3 to open the file 1 corresponding to the file icon 1.

In a possible implementation, the operation 2 may be an operation, or may be a combination of operations. For example, after the device B detects an operation #1 of tapping a file icon set 1, the device B displays a menu in which a file icon may be selected, and the device B continues to detect an operation #2, where the operation #2 is used to determine the file icon 1 in the menu. Then, the device B detects an operation #3, and the operation #3 is used to perform a confirmation operation (the file icon 1 may be opened through the operation #3). The file icon set 1 includes a plurality of file icons. Therefore, the operation #1, the operation #2, and the operation #3 may be considered as specific representations of the operation 2.

In a possible implementation, the file 1 includes but is not limited to at least one of the following: a document, a video, audio, and the like. The file 1 is not specifically limited in this application. For example, the file 1 is a video file, the application 3 is a playing application, and the playing application can be used to present to-be-presented content of the video file.

S330: Before presenting the to-be-presented content of the file 1 by using the application 3, the device B determines whether at least one information element in the to-be-presented content of the file 1 has a preset label.

Specifically, the device B displays the interface 2, and starts the application 3. To protect information security of the to-be-presented content of the file 1, the device B needs to determine whether the preset label is set for the information element in the to-be-presented content of the file 1. The preset label can indicate that an information element for which the preset label is set requires information protection. For example, the to-be-presented content of the file 1 includes 10 information elements. Before allowing the application 3 to process the to-be-presented content of the file 1, the device B needs to determine whether preset labels are set for the 10 information elements. In this way, information protection can be implemented.

It should be understood that, for descriptions of the preset label, refer to the foregoing descriptions. Details are not described herein again. Also, for descriptions of the information element, refer to the foregoing descriptions. Details are not described herein again.

S340: When it is determined that none of the at least one information element has the preset label, present the to-be-presented content of the file 1 by using the application 3; or when it is determined that the at least one information element has the preset label, perform non-presentation processing on the information element having the preset label, and present, by using the application 3, the to-be-presented content that is of the file 1 and on which the non-presentation processing has been performed.

In an example, when the device B determines that no information element in the to-be-presented content of the file 1 has the preset label, the device B may allow the application 3 to present the to-be-presented content of the file 1. In an example, when the device B determines that the information element having the preset label exists in the at least one information element in the to-be-presented content of the file 1, the device B performs non-presentation processing on the information element for which the preset label is set.

Further, the device B allows the application 3 to present the to-be-presented content that is of the file 1 and on which the non-presentation processing has been performed. In this way, the information element that is in the to-be-presented content of the file 1 and on which information protection needs to be performed can be protected, and presentation of the to-be-presented content of the file 1 by the application 3 is not affected, so that both information protection and normal use can be considered.

For example, the to-be-presented content of the file 1 includes the 10 information elements. Before the device B allows the application 3 to present the to-be-presented content of the file 1, the device B needs to determine whether the preset labels are set for the 10 information elements in the to-be-presented content of the file 1. When determining that none of the 10 information elements in the to-be-presented content of the file 1 has the preset label, the device B allows the application 3 to present the to-be-presented content of the file 1. When determining that five information elements in the 10 information elements in the to-be-presented content of the file 1 have the preset labels, after performing non-presentation processing on the five information elements having the preset labels, the device B allows the application 3 to present the to-be-presented content that is of the file 1 and on which the non-presentation processing has been performed.

It should be understood that the non-presentation processing may be processing performed by the device B on the information element having the preset label, and is used to ensure information security of the information element having the preset label in the to-be-presented content of the file 1.

In a possible implementation, the non-presentation processing includes but is not limited to at least one of the following: blocking, blurring, mosaic, sound elimination, or the like. In this way, information protection can be implemented on the information element on which information protection needs to be performed.

For example, in a projection scenario, the user 1 sets preset labels (for example, the preset labels are anti-projection display labels) for one or more information elements that are in the video file and that are not allowed to be projected for display. The device B may allow a projection application to project the video file, but a projection display result of the projection application for the video file includes normal projection display and abnormal projection display. The abnormal projection display is presented projected content of the information element for which the preset label is set and on which the device B has performed non-presentation processing, and the normal projection display is a result of normal projection performed by the projection application on an information element that is in the video file and for which no preset label is set.

Specifically, the user 1 sets the preset label at an information element level of the to-be-presented content of the file 1, where the preset label indicates that information of the information element for which the preset label is set needs to be protected. In this case, before allowing the application 3 to present the to-be-presented content of the file 1, the device B first determines whether the to-be-presented content of the file 1 has the information element for which the preset label is set. If the to-be-presented content of the file 1 has the information element for which the preset label is set, non-presentation processing is performed on the information element for which the preset label is set, so that the information of the information element for which the preset label is set is not obtained by another user, and the another user is not prevented from obtaining information of the information element that is in the to-be-presented content of the file 1 and for which no preset label is set.

In conclusion, the preset label is set at the information element level, and the device performs non-presentation processing on the information element for which the preset label is set. In this way, information protection and normal use can be balanced.

Optionally, in a possible implementation, before the device B performs non-presentation processing on the information element having the preset label, the method 300 may further include:
S340a1: The device B obtains verification information 2 entered by a user.
S340a2: The device B verifies, based on the verification information 2, whether the user is a trusted user.

Specifically, when the device B determines that the to-be-presented content of the file 1 has the information element for which the preset label is set, the device B may require the user (the user may be the user 1 of the file 1 and a user 3 of the application 3, or may be a user 3 of the application 3, and this is not limited herein) to enter the verification information 2 for verifying whether the user is the trusted user. In this way, the information of the information element that is in the to-be-presented content of the file 1 and for which the preset label is set may not be obtained by an untrusted user, and information security of the to-be-presented content of the file 1 is ensured.

For descriptions of the verification information 2, refer to the foregoing descriptions of the verification information 1. Details are not described herein again.

Through setting of a verification mechanism, this application supports verification processing on the user, and on a premise that it is determined that the user is not the trusted user, non-presentation processing is performed on the information element that is in the to-be-presented content of the file 1 and for which the preset label is set. In this way, information security of the information element that is in the to-be-presented content of the file 1 and for which the preset label is set can be ensured, and the trusted user can obtain the information of the information element that is in the to-be-presented content of the file 1 and for which the preset label is set.

The following describes examples of application scenarios of the foregoing information protection method with reference to other accompanying drawings.

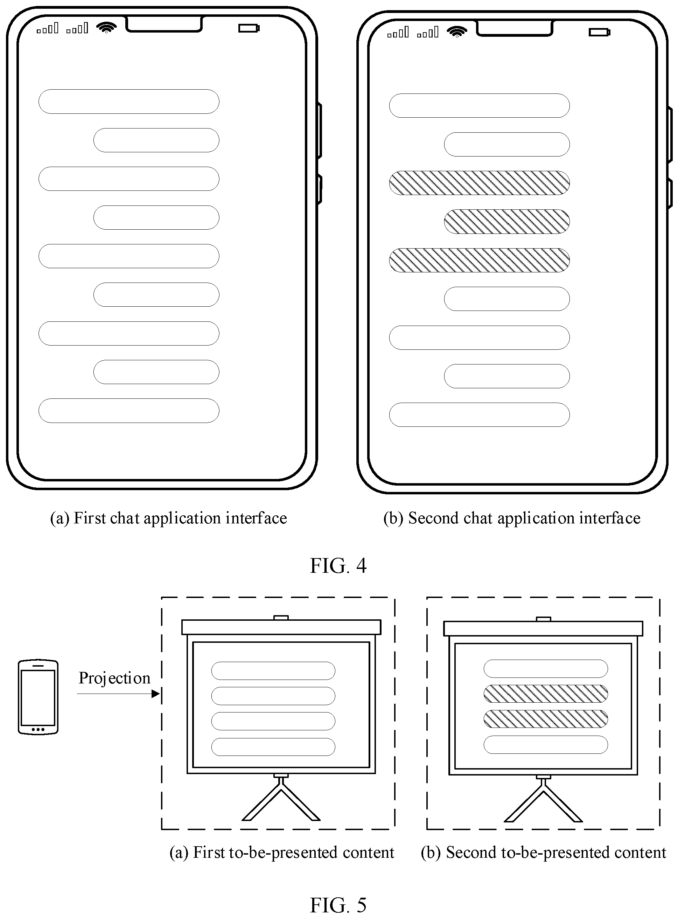

FIG. 4 is a diagram of an application scenario 400. In the application scenario 400, for example, the application 1 is a chat application, the interface 1 is a chat application interface, the application 2 is a screenshot application, and one information element corresponds to one chat record. As shown in (a) in FIG. 4, each round rectangle on a first chat application interface is one information element, and no preset label is set for each information element. The user 2 may normally screenshot all information elements on the first chat application interface by using the screenshot application, and obtain a normal screenshot result of the first chat application interface. As shown in (b) in FIG. 4, each round rectangle on a second chat application interface is one information element, and preset labels are set for a part of information elements (corresponding to round rectangles with slash textures). During screenshot, the device B performs blurring processing, blocking processing, or the like on the part of information elements. The user 2 screenshots the second chat application interface by using the screenshot application, and obtains a screenshot of some chat records obtained through blurring or blocking processing and a screenshot of some normal chat records (corresponding to round rectangles without slash textures). When the user 2 consecutively screenshots chat records on the first chat application interface and the second chat application interface by using the screenshot application, the user 2 can obtain only a normal screenshot of the first chat application interface and an abnormal screenshot of the second chat application interface. In this way, information protection and normal use can be balanced in this application.

FIG. 5 is a diagram of an application scenario 500. In the application scenario 500, for example, the application 3 is a projection application, the file 1 is a video file, and one information element corresponds to one piece of video content. As shown in (a) in FIG. 5, each round rectangle in first to-be-presented content of the file 1 represents one information element, and no preset label (for example, the preset label is an anti-projection label) is set for each information element. The projection application may perform normal projection on all information elements in the first to-be-presented content. As shown in (b) in FIG. 5, each round rectangle in second to-be-presented content of the file 1 represents one information element, and preset labels (for example, the preset labels are anti-projection labels) are set for a part of information elements (corresponding to round rectangles with slash textures). The projection application may perform normal projection on information elements that are in the second to-be-presented content of the file 1 and for which no preset label is set, and perform abnormal projection on the information elements for which element labels are set, for example, block or blur the information elements for which the preset labels are set. In this way, information protection and normal use can be balanced in this application.

In FIG. 5, this application supports manually dragging a video content progress bar that is of the file 1 and that is being projected, and supports manually dragging, to a video content position having the preset label, the video content progress bar that is being projected. Alternatively, the video content progress bar may be manually dragged from a time slot position within the preset label to a video content position without the preset label.

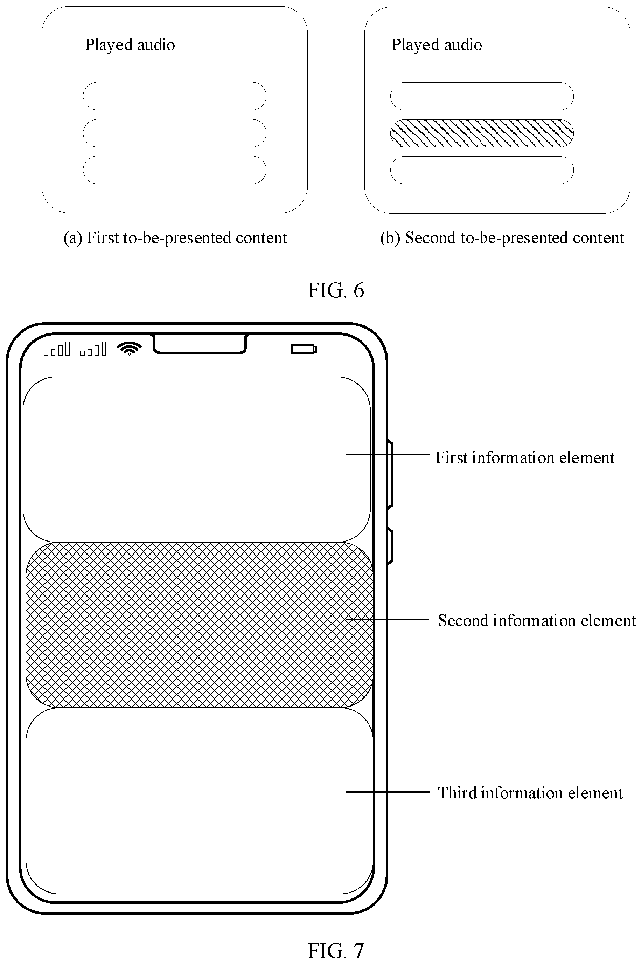

FIG. 6 is a diagram of an application scenario 600. In the application scenario 600, for example, the application 3 is a screen recording application, the file 1 is an audio file, and one information element corresponds to one piece of audio content. As shown in (a) in FIG. 6, each round rectangle in first to-be-presented content of the file 1 represents one information element, and no preset label (for example, the preset label is an anti-recording label) is set for each information element. When the screen recording application performs screen recording, audio recording may be performed on all information elements in the first to-be-presented content. As shown in (b) in FIG. 6, each round rectangle in second to-be-presented content of the file 1 represents one information element, and a preset label (for example, the preset label is an anti-recording label) is set for a part of information elements (corresponding to a round rectangle with a slash texture). The screen recording application cannot normally record the information element that is in the second to-be-presented content and for which the preset label is set (information protection may be performed, through sound elimination or the like, on the information element for which the preset label is set), but may perform recording processing on an information element for which no preset label is set. In this way, information protection and normal use can be balanced in this application.

FIG. 7 is a diagram of an application scenario 700. In the application scenario 700, for example, the application 3 is a document browsing application, the file 1 is a document, and one information element corresponds to one piece of document content. As shown in FIG. 7, in the document browsing application, a first information element and a third information element in to-be-presented content of a document 1 may be normally browsed, but a second information element for which a preset label (for example, the preset label is an anti-browsing label) is set cannot be normally browsed (non-presentation processing may be performed, through blocking processing, blurring processing, or the like, on the information element for which the preset label is set). In this way, information protection and normal use can be balanced in this application.

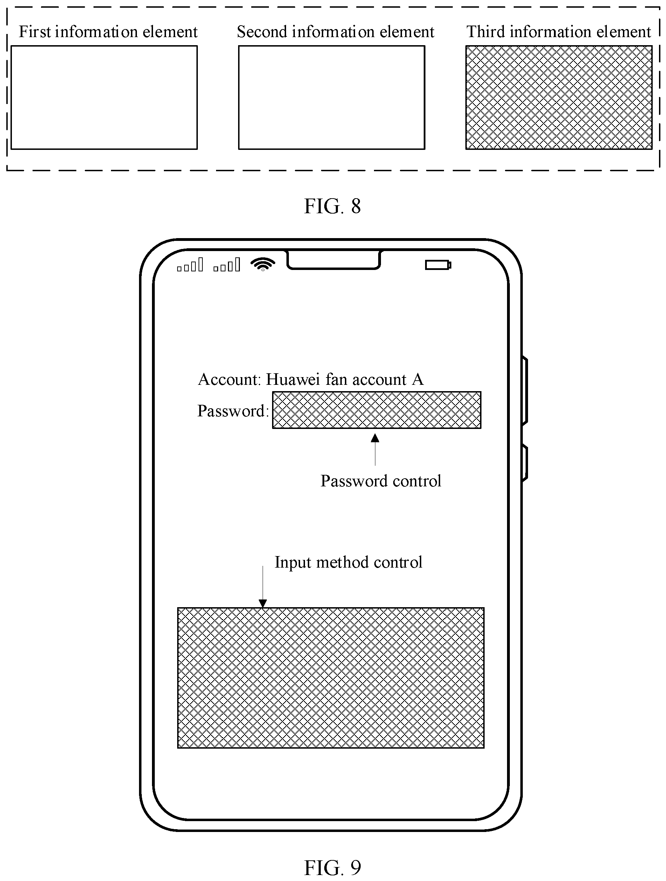

FIG. 8 is a diagram of an application scenario 800. In the application scenario 800, for example, the application 3 is a PPT browsing application, the file 1 is a PPT file, and one information element corresponds to one PPT page. As shown in FIG. 8, in the PPT browsing application, for a PPT file including a plurality of pages, a first information element and a second information element in the PPT file may be normally browsed or displayed, but a third information element PPT page for which a preset label is set cannot be browsed or displayed (non-presentation processing may be performed, through blocking processing, blurring processing, or the like, on the information element for which the preset label is set). In this way, information protection and normal use can be balanced in this application.

FIG. 9 is a diagram of an application scenario 900. In the application scenario 900, for example, the application 2 is a screenshot application, the application 1 is a payment application on a mobile phone device, the interface 1 is a payment application interface, and one information element corresponds to one control. As shown in FIG. 9, the screenshot application cannot normally screenshot a password control (for which a preset label is set) and an input control (for which a preset label is set) in the payment application, but may normally screenshot another control. In other words, for the password control and the input control, content about the two parts in a screenshot result of the screenshot application for the interface 1 of the application 1 may be presented in a form of "mosaic" or the like, and screenshot of another control (for which no preset label is set) is not affected. For example, information such as a Huawei fan account A in an account control is displayed. In this way, information protection and normal use can be balanced.

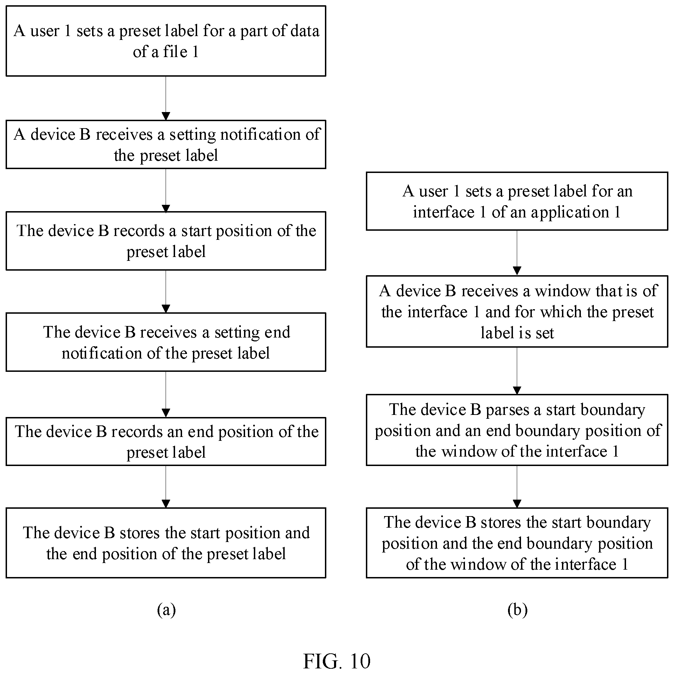

The following describes, with reference to FIG. 10 to FIG. 12, content related to preset label setting and using in the foregoing scenarios by using examples.

FIG. 10 is a diagram of preset label setting 1000. As shown in (a) in FIG. 10, for example, a file 1 is a document. A user 1 sets a preset label for a part of data (or information elements) of the file 1. A device B receives a setting notification of the preset label, and records a start position of the preset label. Then, the device B receives a setting end notification of the preset label, and records an end position of the preset label. Finally, the device B stores the start position and the end position of the preset label. In this case, the device B may perform non-presentation processing on the data for which the preset label is set, to protect information security of the part of data.

In an example, the user indicates the start position and the end position of the preset label in a finger sliding manner. In another example, the user indicates the start position and the end position of the preset label by delimiting a closed or semi-closed graph by using a finger. In another example, the user indicates the start position and the end position of the preset label by dragging a visible identifier by using a finger. Correspondingly, the device B determines the start position and the end position of the preset label in the foregoing manner. In conclusion, a manner in which B indicates the start position and the end position of the preset label is not specifically limited in this application.

It should be understood that, for a manner in which the device B receives the setting start notification of the preset label and the setting end notification of the preset label, refer to a conventional technology. Details are not described herein.

As shown in (b) in FIG. 10, a user 1 sets a preset label for an interface 1 of an application 1, and a device B receives (or determines, or detects) a window that is of the interface 1 and for which the preset label is set, parses a start boundary position and an end boundary position of the window of the interface 1, and stores the start boundary position and the end boundary position of the window of the interface 1. In this case, the device B may perform non-presentation processing on the window that is of the interface 1 and for which the preset label is set, to protect information security of the window of the interface 1.

In an example, the user indicates the start boundary position and the end boundary position of the window of the interface 1 in a finger sliding manner. In another example, the user indicates the start boundary position and the end boundary position of the window of the interface 1 by delimiting a closed or semi-closed graph by using a finger. In another example, the user indicates the start boundary position and the end boundary position of the window of the interface 1 by dragging a visible identifier by using a finger. Correspondingly, the device B determines the start boundary position and the end boundary position of the window of the interface 1 in the foregoing manner. In conclusion, a manner of indicating the start boundary position and the end boundary position of the window of the interface 1 is not specifically limited in this application.

It should be understood that, for a manner in which the device B receives a setting start notification of the preset label and a setting end notification of the preset label, refer to a conventional technology. Details are not described herein.

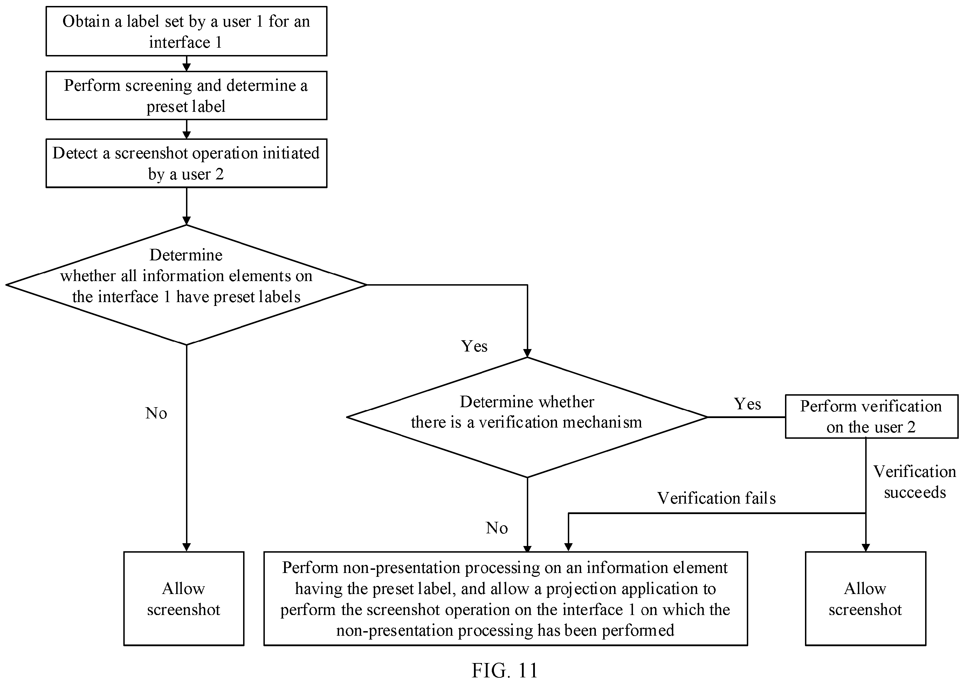

FIG. 11 is a diagram of preset label using 1100. As shown in FIG. 11, for example, an application 2 is a screenshot application. After an application 1 is started, a device B displays an interface 1, obtains a label set by a user 1 for the interface 1, performs screening, and determines a preset label. When a user 2 screenshots the interface 1 by using the screenshot application, the device B detects a screenshot operation initiated by the user 2, and the device B determines whether all information elements on the interface 1 have preset labels. If there is no preset label, the device B allows the screenshot application to screenshot the interface 1. If there is the preset label, the device B determines whether there is a verification mechanism. If no verification mechanism is set, the device B performs non-presentation processing on an information element for which the preset label is set, and allows the screenshot application to perform the screenshot operation on the interface 1 on which the non-presentation processing has been performed. If the verification mechanism is set, the device B performs verification on the user 2. When determining that the user 2 is a trusted user, the device B allows the screenshot application to perform the screenshot operation on the interface 1. On the contrary, when determining that the user 2 is not a trusted user, after performing non-presentation processing on an information element for which the preset label is set, the device B allows the screenshot application to screenshot the interface 1.

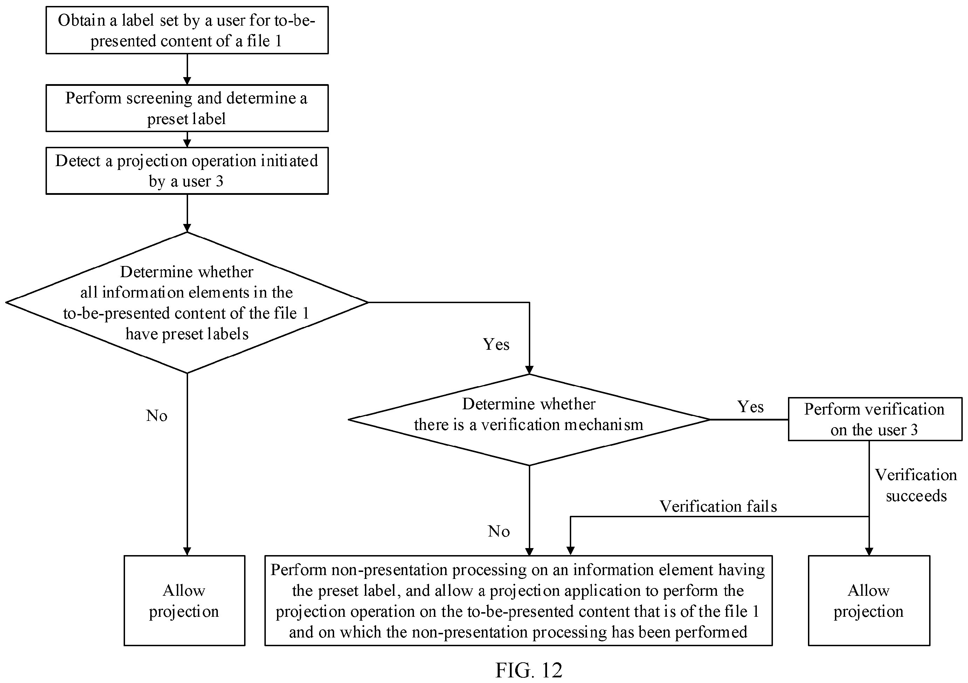

FIG. 12 is a diagram of preset label using 1200. As shown in FIG. 12, for example, the application 3 is a projection application. A device B displays an interface including a file icon 1 corresponding to a file 1, obtains a label set by a user for to-be-presented content of the file 1, performs screening, and determines a preset label. When a user 3 initiates projection on the to-be-presented content of the file 1 by using the projection application, the device B detects a projection operation initiated by the user 3, and the device B determines whether all information elements in the to-be-presented content of the file 1 have preset labels. If there is no preset label, the device B allows the projection application to project the to-be-presented content of the file 1. If there is the preset label, the device B determines whether there is a verification mechanism. If no verification mechanism is set, the device B performs non-presentation processing on an information element for which the preset label is set, and allows the projection application to perform the projection operation on the to-be-presented content that is of the file 1 and on which the non-presentation processing has been performed. If the verification mechanism is set, device B performs verification on the user 3. When determining that the user 3 is a trusted user, the device B allows the projection application to perform the projection operation on the to-be-presented content of the file 1. On the contrary, when determining that the user 3 is not a trusted user, after performing non-presentation processing on an information element for which the preset label is set, the device B allows the projection application to perform the projection operation on the to-be-presented content of the file 1.

The foregoing describes the information protection method in this application. The following describes devices in this application with reference to the accompanying drawings.

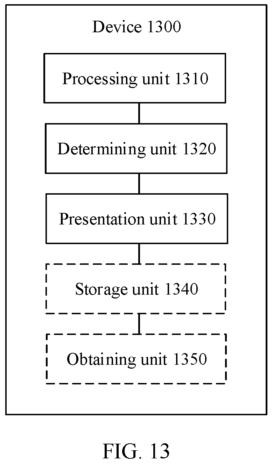

FIG. 13 is a block diagram of a structure of a device 1300 according to an embodiment of this application. As shown in FIG. 13, the device 1300 includes a processing unit 1310, a determining unit 1320, and a presentation unit 1330.

For example, the presentation unit 1330 is configured to display an interface 1 of an application 1. The processing unit 1310 is configured to detect an operation 1 of starting an application 2, and start the application 2 based on the operation 1. The determining unit 1320 is configured to determine whether all information elements on the interface 1 have preset labels. The processing unit 1310 is further configured to perform non-presentation processing and the like on an information element having the preset label. The presentation unit 1330 may be further configured to perform methods or steps related to a display function, a presentation function, or the like in the foregoing method embodiments. The processing unit 1310 may be further configured to perform methods or steps related to a processing function or the like in the foregoing method embodiments. The determining unit 1320 may be further configured to perform methods or steps related to a determining function or the like in the foregoing method embodiments.

Optionally, the device 1300 may further include a storage unit 1340 and an obtaining unit 1350. The obtaining unit 1350 is configured to obtain the preset label entered by a user, and the storage unit 1340 is configured to store the preset label entered by the user, and the like.

It should be noted that information exchange may exist between the foregoing units, to complete the technical solutions recorded in the foregoing method embodiments.

It should be noted that the foregoing units may be configured to execute the technical solutions recorded in the foregoing method embodiments. For specific content, refer to the foregoing content. Details are not described herein again.

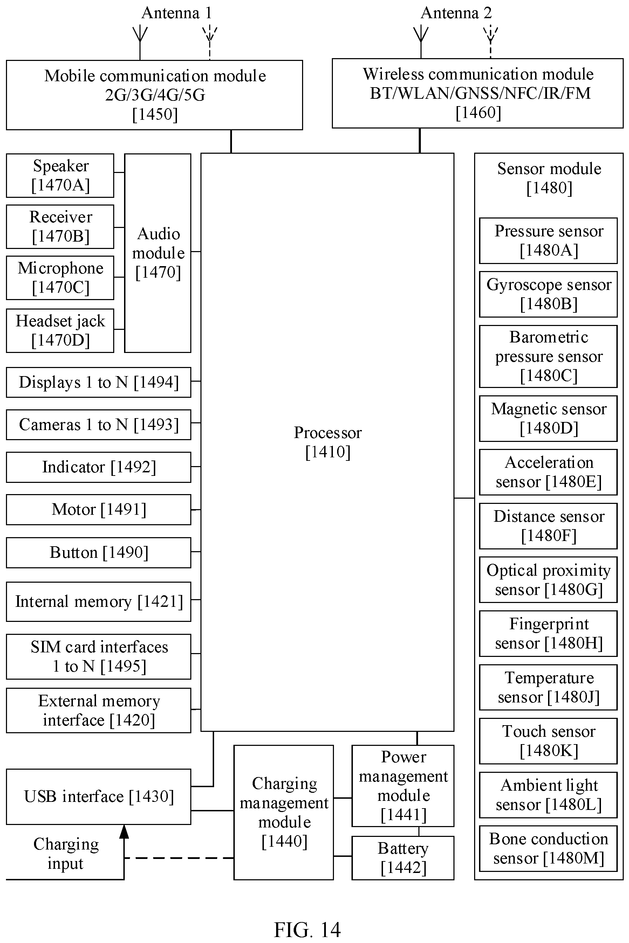

FIG. 14 is a diagram of a hardware structure of a device 1400 (existing when the device includes hardware) according to an embodiment of this application. The device 1400 shown in FIG. 14 is merely an example, and the device 1400 may have more or fewer components than those shown in the figure, may combine two or more components, or may have different component configurations. The components shown in the figure may be implemented in hardware, software, or a combination of hardware and software including one or more signal processing and/or application-specific integrated circuits.

The device 1400 may include a processor 1410, an external memory interface 1420, an internal memory 1421, a universal serial bus (universal serial bus, USB) interface 1430, a charging management module 1440, a power management module 1441, a battery 1442, an antenna 1, an antenna 2, a mobile communication module 1450, a wireless communication module 1460, an audio module 1470, a speaker 1470A, a receiver 1470B, a microphone 1470C, a headset jack 1470D, a sensor module 1480, a button 1490, a motor 1491, an indicator 1492, a camera 1493, a display 1494, a subscriber identity module (subscriber identity module, SIM) card interface 1495, and the like. The sensor module 1480 may include a pressure sensor 1480A, a gyroscope sensor 1480B, a barometric pressure sensor 1480C, a magnetic sensor 1480D, an acceleration sensor 1480E, a distance sensor 1480F, an optical proximity sensor 1480G, a fingerprint sensor 1480H, a temperature sensor 1480J, a touch sensor 1480K, an ambient light sensor 1480L, a bone conduction sensor 1480M, and the like.

The processor 1410 may include one or more processing units. For example, the processor 1410 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the device 1400 may alternatively include one or more processors 1410. The controller may generate an operation control signal based on instruction operation code and a timing signal, to complete control of instruction fetching and instruction execution. In some other embodiments, a memory may be further disposed in the processor 1410, to store instructions and data. For example, the memory in the processor 1410 may be a cache memory. The memory may store instructions or data that has been used or is cyclically used by the processor 1410. If the processor 1410 needs to use the instructions or the data again, the processor may directly invoke the instructions or the data from the memory. This avoids repeated access and reduces waiting time of the processor 1410, thereby improving data processing or instruction execution efficiency of the device 1400.

In some embodiments, the processor 1410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface is an interface that conforms to a USB standard specification, and may be specifically a mini USB interface, a micro USB interface, a USB Type-C interface, or the like. The USB interface may be configured to connect to a charger to charge the device 1400, or may be configured to transmit data between the device 1400 and a peripheral device. The USB interface may alternatively be configured to connect to a headset, and play audio through the headset.

It may be understood that an interface connection relationship between the modules shown in this embodiment of this application is merely an example for description, and does not constitute a limitation on a structure of the device 1400. In some other embodiments of this application, the device 1400 may alternatively use an interface connection manner different from that in the foregoing embodiment, or use a combination of a plurality of interface connection manners.

A wireless communication function of the device 1400 may be implemented through the antenna 1, the antenna 2, the mobile communication module 1450, the wireless communication module 1460, the modem processor, the baseband processor, and the like.

The antenna 1 and the antenna 2 are configured to transmit and receive an electromagnetic wave signal. Each antenna in the device 1400 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 1450 may provide a wireless communication solution that is applied to the device 1400 and that includes 2G, 3G, 4G, 5G, or the like. The mobile communication module 1450 may include at least one filter, a switch, a power amplifier, a low noise amplifier (low noise amplifier, LNA), and the like. The mobile communication module 1450 may receive an electromagnetic wave through the antenna 1, perform processing such as filtering or amplification on the received electromagnetic wave, and transmit a processed electromagnetic wave to the modem processor for demodulation. The mobile communication module 14140 may further amplify a signal modulated by the modem processor, and convert the signal into an electromagnetic wave for radiation through the antenna 1. In some embodiments, at least some functional modules of the mobile communication module 1450 may be disposed in the processor 1410. In some embodiments, at least some functional modules of the mobile communication module 1450 and at least some modules of the processor 1410 may be disposed in a same component.

The wireless communication module 1460 may provide a wireless communication solution that is applied to the device 1400 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) protocol, an infrared (infrared, IR) technology, or the like. The wireless communication module 1460 may be one or more components integrating at least one communication processor module. The wireless communication module 1460 receives an electromagnetic wave through the antenna 2, performs frequency modulation and filtering processing on an electromagnetic wave signal, and sends a processed signal to the processor 1410. The wireless communication module 1460 may further receive a to-be-sent signal from the processor 1410, perform frequency modulation and amplification on the signal, and convert the signal into an electromagnetic wave for radiation through the antenna 2.

The device 1400 may implement a display function through the GPU, the display 1494, the application processor, and the like. The GPU is a microprocessor for image processing, and is connected to the display 1494 and the application processor. The GPU is configured to perform mathematical and geometric calculation, and render an image. The processor 1410 may include one or more GPUs that execute program instructions to generate or change displayed information.

The display 1494 is configured to display an image, a video, or the like. The display 1494 includes a display panel. In some embodiments, the device 1400 may include one or N displays 1494, where N is a positive integer greater than 1.

The device 1400 may implement a photographing function through the ISP, the camera 1493, the video codec, the GPU, the display 1494, the application processor, and the like. The camera 1493 is configured to capture a static image or a video. An optical image of an object is generated through a lens, and is projected onto a photosensitive element. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the device 1400 may include one or N cameras 1493, where N is a positive integer greater than 1.

The speaker 1470A, also referred to as a "loudspeaker", is configured to convert an audio electrical signal into a sound signal. The device 1400 may be used to listen to music or answer a call in a hands-free mode through the speaker 1470A.

The microphone 1470C, also referred to as a "mike" or a "mic", is configured to convert a sound signal into an electrical signal.

In some embodiments, the device may be a portable device that further includes other functions such as a personal digital assistant function and/or a music player function, for example, a mobile phone, a tablet computer, a wearable device (such as a smartwatch) having a wireless communication function, a video player, a headset, a sound box, or a camera. An example embodiment of the portable device includes but is not limited to a portable device provided with iOS^{®}, Android^{®}, Microsoft^{®}, or another operating system. The portable device may alternatively be another portable device, for example, a laptop (Laptop). It should be further understood that, in some other embodiments, the foregoing device may not be a portable device, but may be a desktop computer, a television, a sound box, a camera, or the like.

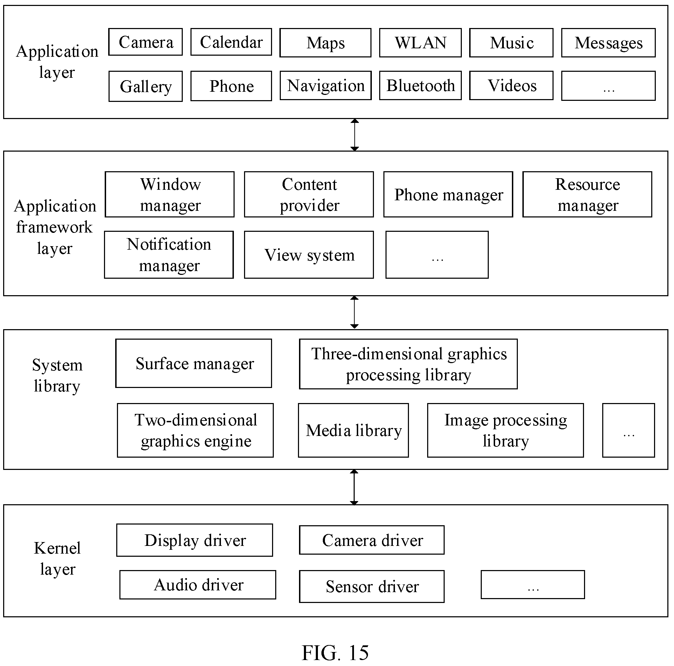

FIG. 15 is a diagram of a software structure of a device 1500 (existing when the device includes software) according to an embodiment of this application. In a layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom. The application layer may include a series of application packages.

As shown in FIG. 15, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer, and the application framework layer includes some predefined functions.

As shown in FIG. 15, the application framework layer may include a window manager, a content provider, a view system, a phone manager, a resource manager, a notification manager, and the like. The window manager is configured to manage a window program. The window manager may obtain a size of a display, determine whether there is a status bar, perform screen locking, perform screenshot, and the like. The content provider is configured to store and obtain data, and enable the data to be accessed by the application. The data may include a video, an image, audio, calls that are made and answered, a browsing history and bookmarks, a phone book, and the like. The view system includes visual controls, such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the device 1500, for example, management of a call status (including answering, declining, or the like).

The resource manager provides various resources for the application, such as a localized character string, an icon, an image, a layout file, and a video file.

The notification manager enables the application to display notification information in the status bar, may be configured to convey a notification-type message, and may automatically disappear after a short pause without user interaction. For example, the notification manager is configured to notify download completion, provide a message notification, and the like. The notification manager may alternatively be a notification that appears in the status bar at the top of the system in a form of graph or scroll bar text, such as a notification for an application running in the background, or a notification that appears on a screen in a form of dialog window. For example, text information is displayed in the status bar, an alert tone is made, the device vibrates, or an indicator blinks.

The system library may include a plurality of functional modules, for example, a surface manager (surface manager), a media library (media libraries), a three-dimensional graphics processing library (for example, OpenGL ES), a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In this embodiment of this application, when the device is software or a system, the device may be used in a computer, a mobile phone, a head unit, a home device, and the like.

In embodiments provided in this application, it should be understood that the disclosed systems, apparatuses, and methods may be implemented in other manners. The described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The software product is stored in a storage medium and includes several instructions for instructing a device to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information protection method, wherein the method is applied to a device, and the method comprises:
displaying an interface of a first application, wherein the interface comprises at least one information element;
detecting an operation of starting a second application, and starting the second application based on the operation, wherein the second application is used to process the interface;
determining whether the at least one information element has a preset label; and
when it is determined that none of the at least one information element has the preset label, allowing the second application to process the interface; or
when it is determined that the at least one information element has the preset label, performing non-presentation processing on an information element having the preset label, and allowing the second application to process the interface on which the non-presentation processing has been performed.

2. The method according to claim 1, wherein before the performing non-presentation processing on an information element having the preset label, the method further comprises:
obtaining verification information of a user of the second application; and
verifying, based on the verification information, whether the user is a trusted user.

3. The method according to claim 2, wherein the non-presentation processing is performed on the information element having the preset label when it is determined that the user is not the trusted user.

4. The method according to any one of claims 1 to 3, wherein the non-presentation processing comprises at least one of the following:
blocking, blurring, mosaic, or sound elimination.

5. An information protection method, wherein the method is applied to a device, and the method comprises:
displaying an interface comprising at least one file icon, wherein the at least one file icon comprises a first file icon;
detecting an operation performed on the first file icon, and in response to the operation, opening, by using a first application, a first file corresponding to the first file icon;
before to-be-presented content of the first file is presented by using the first application, determining whether at least one information element in the to-be-presented content has a preset label; and
when it is determined that none of the at least one information element has the preset label, presenting the to-be-presented content by using the first application; or
when it is determined that the at least one information element has the preset label, performing non-presentation processing on an information element having the preset label, and presenting, by using the first application, the to-be-presented content on which the non-presentation processing has been performed.

6. The method according to claim 5, wherein before the performing non-presentation processing on an information element having the preset label, the method further comprises:
obtaining verification information of a user of the first application; and
verifying, based on the verification information, whether the user is a trusted user.

7. The method according to claim 6, wherein the non-presentation processing is performed on the information element having the preset label when it is determined that the user is not the trusted user.

8. The method according to any one of claims 5 to 7, wherein the non-presentation processing comprises at least one of the following:
blocking, blurring, mosaic, or sound elimination.

9. A device, comprising at least one processor, at least one memory, and a display, wherein
when the at least one processor runs,
the device is enabled to perform the method according to any one of claims 1 to 4, or
the device is enabled to perform the method according to any one of claims 5 to 8.

10. A program product, wherein when the program product runs on a device,
the device is enabled to perform the method according to any one of claims 1 to 4, or
the device is enabled to perform the method according to any one of claims 5 to 8.

11. A readable storage medium, comprising instructions, wherein when the instructions are run on a device,
the device is enabled to perform the method according to any one of claims 1 to 4, or
the device is enabled to perform the method according to any one of claims 5 to 8.
